# EUROPÄISCHE PATENTSCHRIFT

(11) **EP 3 902 055 B1**
(45) Veröffentlichungstag und Bekanntmachung des Hinweises auf die Patenterteilung: **11.10.2023**
(21) Anmeldenummer: 21168472.5
(22) Anmeldetag: 15.04.2021
(51) Int. Cl.: H01M 50/105, H01M 10/04, H01M 10/058, B21D 22/00, B29C 35/08, B21D 22/06, B21D 22/22, B21D 37/06, B21D 37/16, H01M 10/0525, B29C 51/08, B29L 31/34, B29L 31/00

(54) **VERFAHREN UND VORRICHTUNG ZUR HERSTELLUNG VON METALL-VERBUNDFOLIEN FÜR BATTERIEZELLEN**
METHOD AND DEVICE FOR THE PRODUCTION OF METAL COMPOSITE FILMS FOR BATTERY CELLS
PROCÉDÉ ET DISPOSITIF DE FABRICATION DE FEUILLES MÉTALLIQUES COMPOSITES POUR ÉLÉMENTS DE BATTERIE

(30) Priorität: 24.04.2020 DE 102020111274
(43) Veröffentlichungstag der Anmeldung: 27.10.2021
(73) Patentinhaber: Volkswagen Aktiengesellschaft, 38440 Wolfsburg (DE)
(72) Erfinder: Grau, Frederik, 38124 Braunschweig (DE); Jamadar, Kartik, 38442 Wolfsburg (DE); Theuerkauf, Christian, 38114 Braunschweig (DE)
(74) Vertreter: karo IP

(56) Entgegenhaltungen:
- EP-A1- 3 566 853
- KR-A- 20190 105 765

## Beschreibung

Die vorliegende Erfindung betrifft ein Verfahren zur Herstellung einer Batteriezelle sowie eine Vorrichtung zur Herstellung einer Batteriezelle mit einer ersten und einer zweiten Formvorrichtung.

Für die zunehmende Elektromobilität werden im verstärkten Maße Batterien benötigt, die in der Regel aus einer Mehrzahl von Batteriezellen bestehen. Die Fertigung dieser Batteriezellen ist daher von zunehmender Bedeutung für eine wirtschaftliche Verwertung dieser Technologie. Hierzu ist es dem Stand der Technik bereits bekannt sogenannte Zellstapel innerhalb einer Umhüllung anzuordnen. Derartige Batteriezellen können auch als Elektrolyt-Pouchzellen bezeichnet werden. Der Zellstapel und ein Elektrolyt sind dabei von der Umhüllung vollständig umschlossen und lediglich die elektrischen Anschlüsse der Batteriezellen, die sogenannten Ableitertabs, ragen aus der Umhüllung nach außen heraus, um einen elektrischen Anschluss der Batteriezellen zu ermöglichen.

In diesem Zusammenhang sind verschiedene Schritte zur Herstellung von Elektrolyt-Pouchzellen bekannt. So können Metallverbundfolien durch Tiefziehen zu sogenannten Pouchhälften umgeformt werden. Weitere Arbeitsschritte bilden beispielsweise das Trennen der Pouchhälften, deren Lagerung und die Zellassemblierung mit dem Siegeln, bei der ein Zellstapel von den Pouchhälften dicht umschlossen wird.

Die bislang bekannten Konzepte haben jedoch unterschiedliche Nachteile. So sind derzeit einzelne Prozessschritte notwendig, die seriell nacheinander und an unterschiedlichen Arbeitsstationen abgearbeitet werden müssen. Dies führt zu unnötig langen Prozesszeiten und es ist zudem erforderlich für jeden einzelnen Prozessschritt eine hohe Prozessgenauigkeit sicherzustellen. Ein weiterer Nachteil besteht in den hohen Investitionskosten, die aufgrund der Vielzahl von Einzelanlagen im Zusammenhang mit der Herstellung von Elektrolyt-Pouchzellen erforderlich sind. Die Vielzahl von Einzelanlagen führen außerdem dazu, dass die Gesamtanlage einen relativ hohen Platzbedarf aufweist und das Materialhandling zwischen den Einzelanlagen aufwendig ist.

Die EP 3 566 853 A1 ist auf ein Verfahren zur Herstellung von Pouchfolien gerichtet.

Die KR 2019 0105765 A ist auf eine Pressenvorrichtung zum Tiefziehen einer Pouchfolie gerichtet.

Aufgabe der vorliegenden Erfindung ist es daher, die sich aus dem Stand der Technik ergebenden Probleme zumindest teilweise zu lösen. Insbesondere sollen ein Verfahren und eine Vorrichtung angegeben werden, die die Herstellung von Batteriezellen mit einem deutlich reduzierten Fertigungsaufwand ermöglichen.

Diese Aufgaben werden gelöst mit einem Verfahren und einer Vorrichtung mit den Merkmalen der unabhängigen Patentansprüche. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Hierzu trägt ein Verfahren zur Herstellung einer Metallverbundfolie für Batteriezellen bei, das zur Herstellung einer Batteriezelle, wenigsten die folgenden Schritte aufweist:
a) Umformen einer ersten Pouchfolie mittels einer ersten Formvorrichtung mit einer ersten Ausnehmung zu einer ersten Pouchhälfte;
b) Umformen einer zweiten Pouchfolie mittels einer zweiten Formvorrichtung mit einer zweiten Ausnehmung zu einer zweiten Pouchhälfte;
c) Einlegen eines Zellstapels in die erste Formvorrichtung und die darin befindliche erste Pouchhälfte;
d) nachfolgendes Zusammenführen der ersten Formvorrichtung mit der darin befindlichen umgeformten ersten Pouchhälfte und der zweiten Formvorrichtung mit der darin befindlichen zweiten Pouchhälfte;
e) zumindest teilweises Verbinden der ersten und zweiten Pouchhälften zu einer Batteriezelle.

In einem ersten Schritt wird ein Stück Pouchfolie mittels einer ersten Formvorrichtung zu einer ersten Pouchfolienhälfte umgeformt. Dies kann beispielsweise durch Tiefziehen erfolgen, indem die Pouchfolie mittels eines Stempels in eine komplementär geformte Ausnehmung hinein umgeformt wird. Im zweiten Schritt wird ein weiteres Stück Pouchfolie mittels einer zweiten Formvorrichtung, die ebenfalls eine Ausnehmung aufweist, zu einer zweiten Pouchfolienhälfte umgeformt. Diese beiden Umformvorgänge a) und b) können wahlweise nacheinander, gleichzeitig oder zeitversetzt ausgeführt werden.

Im Schritt c) wird ein Zellstapel in die erste Pouchfolienhälfte eingelegt, die sich noch immer in der ersten Formvorrichtung befindet. Der Zellstapel weist dabei die für die Funktion der Batteriezellen erforderlichen Komponenten auf. Dies sind in der Regel die Anoden, Kathoden, deren jeweils zugehörige Aktivmaterialschichten, Separatorschichten, Ableiterfähnchen und Ableitertabs. Hierbei sind in der Regel die Aktivmaterialschichten auf den jeweiligen Anoden bzw. Kathoden aufgebracht, die ihrerseits mittels Ableiterfähnchen jeweils mit dem zugehörigen Ableitertab verbunden sind.

Auch während der nachfolgenden Prozessschritte verbleiben die beiden Pouchfolienhälften unverändert in den jeweiligen ersten und zweiten Formvorrichtungen. Im Schritt d) werden dann die beiden Formvorrichtungen mit den darin befindlichen Pouchfolienhälften relativ zueinander bewegt, sodass die beiden Pouchfolienhälften aneinander Anliegen und die in den jeweiligen Ausnehmungen ausgebildeten Verprägungen einen gemeinsamen Bauraum für die Aufnahme des Zellstapels umschließen. Im Schritt e) werden dann die beiden Pouchfolienhälften zu einer Batteriezelle, die auch als Elektrolyt-Pouchzelle bezeichnet werden kann, zumindest teilweise verbunden.

Unter Verbinden ist dabei das vollständige oder teilweise Verbinden der Pouchhälften entlang eines Kontaktbereichs zu verstehen, in dem die beiden Pouchfolien bzw. Pouchhälften in direktem Kontakt miteinander stehen. Dieses Verbinden kann beispielsweise zunächst auch nur an drei Seiten einer vorzugsweise rechteckigen Batteriezelle erfolgen, um diese anschließend noch mit einem Elektrolyten befüllen und/oder Vakuumieren zu können bevor diese danach vollständig verschlossen wird. Das Verbinden der Pouchfolien bzw. Pouchhälften kann dabei unmittelbar oder mittelbar über ein dazwischen angeordnetes Siegelband erfolgen. So können die aneinander anliegenden Pouchfolien bzw. Pouchhälften beispielsweise mittels einer Verklebung, einer Verprägung, einer Umformung oder einer Verschweißung unmittelbar und dicht miteinander verbunden werden. Besonders anspruchsvolle Bereiche der Batteriezelle bilden Austrittsstellen an denen Ableitertabs, die als elektrische Kontakte aus der Batteriezelle herausragen. Um die Batteriezelle an diesen Austrittsstellen sicher und zuverlässig abzudichten, können dort zusätzlich Siegelbänder zwischen den Pouchfolien bzw. Pouchhälften angeordnet werden, die nach dem Verbinden an den Ableitertabs für eine vollständige Abdichtung der Batteriezelle sorgen.

Der Vorteil besteht insbesondere darin, dass die Pouchfolien nach dem Einlegen in die erste bzw. zweite Formvorrichtung darin verbleiben können und mehrere Arbeitsschritte ausgeführt werden können ohne, dass die Pouchfolien bzw. Pouchhälften aus der Formvorrichtung entnommen, separat transportiert oder in sonstiger Weise als Einzelteile gehandhabt werden müssen. Hierdurch können bei der Fertigung erhebliche Zeiteinsparungen realisiert werden. Zudem können auch evtl. auftretende Rückfederungseffekte während der ansonsten erforderlichen Handlingsprozesse vollständig vermieden werden, so dass sich diese nicht negativ auf die Qualität auswirken können.

Die Schritte a) bis e) können wenigstens einmal in der hier angegebenen Reichenfolge a), bis e) durchgeführt werden. Es ist möglich, dass diese Schritte unterschiedlich oft und/oder zumindest teilweise zeitlich überlagernd durchgeführt werden.

Wird nur ein reduzierter Bauraum innerhalb der Pouchhälften benötigt, ist es nicht erfindungsgemäß möglich den Schritt b) entfallen zu lassen und die erste Pouchhälfte aus dem Schritt a) direkt mit einer in der zweiten Formvorrichtung befindlichen unverformten Pouchfolie zu kontaktieren. In diesem Fall reduziert sich der von den Pouchfolien umschlossene Bauraum für den Zellstapel um rund 50%, da die zweite Pouchfolie keine Verprägung und damit keinen umschlossenen Bauraum aufweist.

Insbesondere kann vorgesehen werden, dass das Umformen der Pouchfolie zu einer Pouchhälfte mittels eines atmosphärischen Überdrucks bzw. Unterdrucks oder wenigstens eines elektromagnetischen Impulses EMP durchgeführt wird. Insbesondere die Umformung mittels eines elektromagnetischen Impulses kann in sehr kurzer Zeit erfolgen, wodurch die Fertigung mit sehr hohen Taktraten erfolgen kann. Hierzu können elektrische Spulen in der Vorrichtung angeordnet werden, die dazu geeignet sind ein starkes elektromagnetisches Feld aufzubauen, sobald sie von einem elektrischen Strom durchflossen werden. Bei geeigneter Ausrichtung des so erzeugten elektromagnetischen Feldes wird die Pouchfolie dann durch den elektromagnetischen Impuls und die von diesem verursachten elektromagnetischen Kräfte von der Spule weg und in die Formvorrichtung hinein bewegt Alternativ oder ergänzend dazu kann die Umformung der Pouchfolie auch mittels eines Unterdrucks oder eines Überdrucks erfolgen, wobei die jeweiligen Drücke so einwirken sollen, dass die Pouchfolie in die Ausnehmung der Formvorrichtung hineinbewegt wird. Diese Verfahren können einzeln als Alternativverfahren zum Umformen durch Stempeln oder auch kombiniert miteinander zur Umformung der Pouchfolien angewendet werden.

Insbesondere vorteilhaft ist es dabei als Pouchfolie eine Metallverbundfolie und insbesondere ein Aluminium-Verbundfolie zu verwenden. Derartige Pouchfolien bestehen aus wenigstens einer Metallschicht und wenigstens einer Kunststoffschicht.

Die Metallverbundfolien sind durch diesen Aufbau besonders widerstandsfähig und gleichzeitig gut umformbar.

Ganz besonders vorteilhaft kann die Pouchhälfte mittels eines Unterdrucks auch in der Formvorrichtung fixiert werden. Legt man einen Unterdruck an die Ausnehmung der Formvorrichtung an, so kann dieser Unterdruck einerseits die Umformung der Pouchfolie unterstützen. Ein weiterer Vorteil besteht aber auch darin, dass die Pouchfolie bzw. die bei der Umformung entstandene Pouchhälfte mittels des Unterdrucks sicher in der Ausnehmung der Formvorrichtung fixiert werden kann. Dies ist beispielsweise dann vorteilhaft, wenn die Formvorrichtung in ihrer Lage verändert wird. Die Fixierung der Pouchfolie mittels Unterdrucks erlaubt es sogar die Formvorrichtung um 180° auf den Kopf zu stellen, ohne dass dabei die Pouchhälfte aus der Formvorrichtung herausfällt.

Eine andere Weiterbildung kann darin bestehen, dass die Formvorrichtung beheizt wird. Die verwendeten Pouchfolien können mit steigenden Temperaturen zunehmend leichter umgeformt werden. Aus diesem Grund ist es sinnvoll die Formvorrichtung auf eine Temperatur unterhalb des Schmelzpunkts der Pouchfolie zu erwärmen, um eine auf diese Weise erwärmte Pouchfolie besser umformen zu können. Dies hat die Vorteile, dass einerseits die Tiefziehfähigkeit verbessert wird, da höhere Umformgrade realisiert werden können. Gleichzeitig verringert sich durch die Erwärmung auch die Rückfederung der Pouchfolie nach dem Umformvorgang, so dass auch die Maßhaltigkeit der so hergestellten Pouchhälften verbessert wird.

Weiterhin vorteilhaft ist es, wenn wenigstens zwei Bearbeitungsschritte ausgeführt werden, während sich die erste bzw. zweite Pouchhälfte jeweils in der ersten bzw. zweiten Formvorrichtungen befindet. Bei einer besonders einfachen Ausführungsform kann beispielsweise vorgesehen werden, dass wenigstens zwei Prozessschritte in der Formvorrichtung ausgeführt werden. Solche typischen Prozessschritte sind beispielsweise das Abtrennen der zugeführte Pouchfolien von einem Pouchfolienvorrat, wie beispielsweise einem Coil, das Umformen der Pouchfolien zu Pouchhälften, das Zusammenführen der Pouchhälften, das Einlegen des Stellstapels, das Verbinden der Pouchhälften oder das Zuschneiden der Außenkontur der Pouchhälften bzw. der Batteriezelle. Besonders bevorzugt werden jedoch möglichst viele dieser Prozessschritte ausgeführt, solange sich die Pouchfolien bzw. Pouchhälften in der Formvorrichtung befinden.

Insbesondere kann vorgesehen werden, dass wenigstens eine der Pouchhälften oder die Batteriezelle mit den verbundenen Pouchhälften in der Formvorrichtung auf eine definierte Länge oder Außenkontur zugeschnitten wird. Hierzu können in oder an der Formvorrichtung Schneideinrichtungen vorgesehen werden, die die zugeführten Pouchfolien vom verbleibenden Pouchfolienvorrat abtrennen. Weiterhin können Schneideinrichtungen in der Formvorrichtung vorgesehen werden, die die zugeführte Pouchfolie in eine erste und eine zweite Pouchfolie auftrennen, um diese danach jeweils in der ersten bzw. der zweiten Formvorrichtung zu Pouchhälften umzuformen. Schließlich können noch weitere Schneideinrichtungen vorgesehen werden, die dazu ausgebildet sind, die Außenkontur der umgeformten Pouchhälften jeweils einzeln oder die Außenkontur der fertige Batteriezelle insgesamt exakt zu beschneiden.

Weiterhin wird die Aufgabenstellung von einer Vorrichtung zur Herstellung einer Batteriezelle gelöst, die mit einer ersten und einer zweiten Formvorrichtung und jeweils wenigstens einer Fixiervorrichtung, einer Umformvorrichtung, einer Zuführvorrichtung für Zellstapel, einer Positioniervorrichtung zum Zusammenführen von Stirnseiten der Formvorrichtungen, einer Verbindungseinrichtung und einer ersten Schneideinrichtung ausgestattet ist.

Die Vorrichtung ist so eingerichtet, dass diese (alle) Schritte des hier vorgeschlagenen Verfahrens ausführen kann.

Die Vorrichtung weist eine erste und eine zweite Formvorrichtung auf, deren Stirnseiten mittels einer Positioniervorrichtung zur gegenseitigen Anlage gebracht werden können.

Ferner weist die Vorrichtung eine Fixiervorrichtung auf, um die umzuformenden Pouchfolien an der jeweiligen Formvorrichtung fixieren zu können.

Die weiterhin vorgesehen Umformvorrichtung dient dazu die fixierten und in der Regel planaren Pouchfolien zu Pouchhälften mit Verprägungen umzuformen, in denen später Zellstapel angeordnet werden können. Hierzu ist eine Zuführvorrichtung vorgesehen, die vorgefertigte Zellstapel in die Verprägungen der Pouchhälften einsetzen kann. Die Zuführvorrichtung kann beispielsweise mittels eine Roboterarms realisiert werden, die dazu ausgebildet ist einen Zellstapel zu greifen und in die Verprägung einer Pouchhälfte einzusetzen, die sich wiederum in der Ausnehmung der Formvorrichtung befindet. Das Zuführen des Zellstapels erfolgt dabei bevor die beiden Pouchhälften mittels der Positioniervorrichtung aneinander zu Anlage gebracht werden.

Zur Verbindung der Pouchhälften ist eine Verbindungseinrichtung vorgesehen, die die Pouchhälften mit dem darin angeordneten Zellstapel verbinden bzw. siegeln kann.

Schließlich ist noch wenigstens eine Schneideinrichtung vorgesehen, die die Außenkontur der Pouchhälften oder der fertigen Batteriezelle exakt beschneiden kann. Der Beschnitt der Außenkontur kann dabei zu unterschiedlichen Zeitpunkten in der Abfolge der Prozessschritte erfolgen. So kann die Außenkontur der Pouchfolie bereits unmittelbar nach dem Zuführen der Pouchfolie vom Pouchfolienvorrat erfolgen. Alternativ kann die Außenkontur der Batteriezelle auch erst in der Kontur zugeschnitten werden, nachdem bereits das Siegeln der Pouchhälften erfolgt ist. Der Zeitpunkt des Zuschnitts der Außenkontur kann somit je nach Bedarf zwischen dem sehr frühen oder dem sehr späten Prozessschritt gewählt werden.

Bei einer bevorzugten Weiterbildung kann noch eine zusätzliche Zuführvorrichtung für die Zufuhr von Pouchfolie von einem Pouchfolienvorrat zu den ersten und zweiten Formvorrichtungen vorgesehen werden. Damit kann auch die Zufuhr von Pouchfolie weitestgehend automatisiert werden, sofern die Schneideinrichtung auch dazu ausgebildet ist, die zugeführte Pouchfolie in ihrer Länge zu beschneiden.

Vorteilhafterweise kann dabei vorgesehen werden, dass wenigstens eine Formvorrichtung eine Heizvorrichtung aufweist, wodurch die Umformbarkeit und Maßhaltigkeit der gefertigten Pouchhälften verbessert wird.

Insbesondere kann die erste Schneideinrichtung wenigstens zum Beschneiden einer Länge oder einer Kontur der Pouchfolie, der Pouchhälfte oder der Batteriezelle ausgebildet sind.

Ebenfalls vorteilhaft ist es, wenn eine weitere Schneidvorrichtung zum Trennen einer endlos zugeführten Pouchfolie vorgesehen ist.

Die Erläuterungen zum Verfahren können vollumfänglich auch zur Spezifizierung der Vorrichtung herangezogen werden, und umgekehrt.

Die somit hergestellte Batteriezelle kann mit Vorteil in einem Kraftfahrzeug eingebaut werden bzw. sein, weil diese Batteriezellen mit besonders günstigen Stückkosten gefertigt werden können und somit die Kosten des Gesamtfahrzeugs positiv beeinflussen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig.1: eine schematische Seitenansicht einer Vorrichtung zur Herstellung von Batteriezellen;
Fig. 2: die Vorrichtung nach Figur 1 in einem zweiten Zustand;
Fig. 3: die Vorrichtung nach Figur 1 in einem dritten Zustand;
Fig. 4: die Vorrichtung nach Figur 1 in einem vierten Zustand;
Fig. 5: die Vorrichtung nach Figur 1 in einem fünften Zustand;
Fig. 6: die Vorrichtung nach Figur 1 in einem sechsten Zustand;
Fig. 7: die Vorrichtung nach Figur 1 in einem siebten Zustand;
Fig. 8: die Vorrichtung nach Figur 1 in einem achten Zustand;
Fig. 9: die Vorrichtung nach Figur 1 in einem neunten Zustand; und
Fig. 10: die Vorrichtung nach Figur 1 in einem zehnten Zustand.

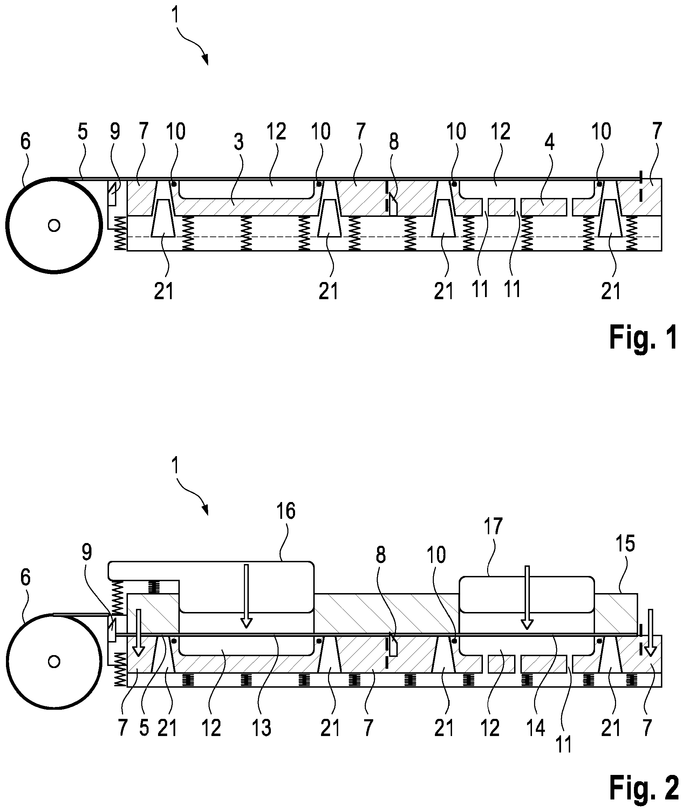

In Figur 1 ist eine Vorrichtung 1 zur Herstellung von Batteriezellen 2 schematisch in einer Seitenansicht dargestellt. Die Vorrichtung 1 weist eine erste Formvorrichtung 3 sowie eine zweite Formvorrichtung 4 auf. Von der linken Seite her wird eine Pouchfolie 5 von einem Pouchfolienvorrat 6 in Richtung der ersten und zweiten Formvorrichtung 3,4 zugeführt, sodass diese von der Pouchfolie 5 bedeckt sind. Die Formvorrichtungen 3,4 bilden dabei einen Bestandteil einer Matrize 7 der Vorrichtung 1. Die Matrize 7 ist zusammen mit der ersten Formvorrichtung 3 und der zweite Formvorrichtung 4 federnd gelagert und kann bei der Beaufschlag an deren Oberseite mit in der Bildebene nach unten wirkenden Kräften nach unten hin einfedern. Ferner ist er die Vorrichtung 1 mit einer ersten Schneideinrichtung 8 und einer zweiten Schneideinrichtung 9 ausgestattet, deren Funktionsweise später noch erläutert wird.

Die erste Formvorrichtung 3 und die zweite Formvorrichtung 4 sind jeweils mit einer Heizvorrichtung 10 ausgestattet, die dazu geeignet ist die Formvorrichtungen 3,4 auf eine Temperatur über der Raumtemperatur zu erwärmen. In der Regel bestehen Pouchfolien 5 aus einem Verbund von Kunststoffen und Metallen. Durch das Erwärmen der Pouchfolie 5 kann die Tiefziehfähigkeit der Pouchfolie verbessert werden, sodass größere Umformungsgrade erreicht werden. Genau dies wird mittels der Heizvorrichtung 10 erreicht, indem die Formvorrichtungen 3,4 und damit auch die Pouchfolie 5 erwärmt werden. Vorzugsweise erfolgt die Erwärmung dabei auf eine Temperatur, die noch unterhalb der Schmelztemperatur, der in der Pouchfolie 5 verwendeten Kunststoffe liegen.

In einem Bodenbereich der zweiten Formvorrichtung 4 sind Absaugkanäle 11 vorgesehen, die mittels einer nicht dargestellten Vakuumpumpe mit einem Unterdruck beaufschlagt werden können, um die Pouchfolie 5 in eine Ausnehmung 12 einzusaugen. Hierbei kann das erzeugte Vakuum zwei Funktionen erfüllen. Die erste Funktion besteht darin den Umformvorgang zu unterstützen und die Tiefziehfähigkeit der Pouchfolie 5 zu verbessern. Dies wird erreicht, indem die eingeschlossene Luft unterhalb der Pouchfolie durch das anliegende Vakuum beim Tiefziehen abgesaugt wird. Dadurch wird beim Umormen eine Beule in der Pouchfolie aufgrund von eingeschlossener Luft verhindert. Die zweite Funktion besteht darin die Pouchfolie 5 bzw. eine durch den Tiefziehvorgang erzeugte Pouchhälfte 13,14 (in Figur 2 dargestellt) sicher in der Ausnehmung 12 zu fixieren, wenn die Formvorrichtung zusammen mit dieser Pouchhälfte 13,14 bewegt wird.

Ferner weist die zweite Formvorrichtung 4 eine erste Schneidvorrichtung 8 sowie eine zweite Schneidvorrichtung 9 auf. Die erste Schneidvorrichtung 8 dient dazu die vom Pouchfolienvorrat 6 zugeführte Pouchfolie 5 in zwei Teile zu unterteilen. Die zweite Schneidvorrichtung 9 dient dazu die Pouchfolie 5 vom Pouchfolienvorrat 6 abzutrennen.

In Figur 2 ist die Vorrichtung 1 in einem zweiten Zustand dargestellt, in dem die Pouchfolie 5 von einem Niederhalter 15 gegen die Matrize 7 gepresst wird. Die Matrize 7 ist in diesem Zustand zusammen mit der ersten Formvorrichtung 3 und der zweiten Formvorrichtung 4 in einem eingefederten Zustand auf Anschlag mit einem feststehenden Matrizeneinsatz 21 dargestellt, d. h. die Federn sind komprimiert, sodass die Pouchfolie 5 sicher zwischen dem Niederhalter 15 und der Matrize 7 gehalten wird. Der Matrizeneinsatz 21 dient dazu, um eine ebene Fläche für den Umformvorgang zu schaffen. Während des Vorgangs des Niederfahrens des Niederhalters 15 hat die zweite Schneidvorrichtung 9 die Pouchfolie 5 vom Pouchfolienvorrat 6 getrennt. Gleichzeitig hat die erste Schneidvorrichtung 8 die Pouchfolie 5 in eine erste Pouchhälfte 13 und eine zweite Pouchhälfte 14 aufgetrennt. Weiterhin ist in dieser Darstellung erkennbar, dass ein erster Stempel 16 und ein zweiter Stempel 17 in eine Position oberhalb der Pouchhälften 13,14 Verfahren sind.

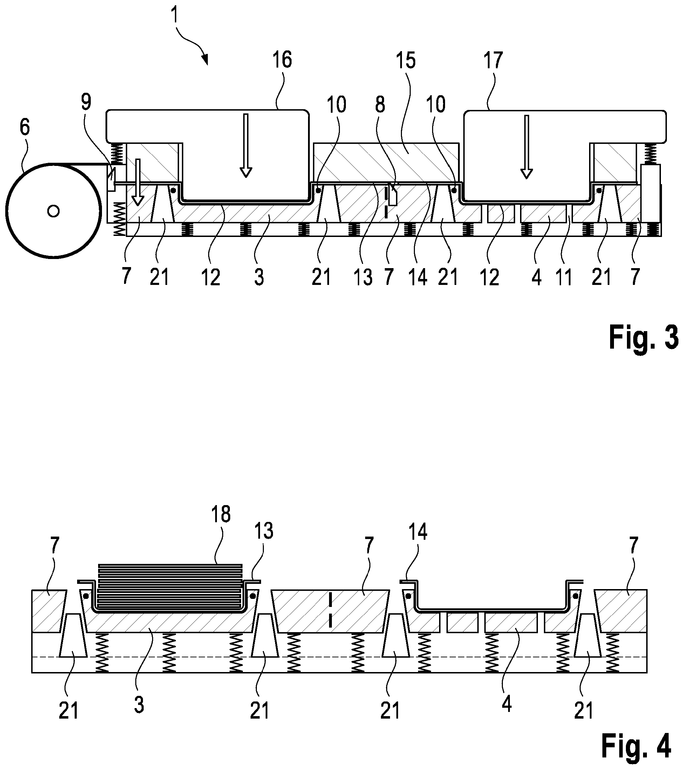

Die Figur 3 zeigt einen dritten. Zustand, bei dem die Stempel 16,17 nach unten und in die Ausnehmungen 12 hinein Verfahren sind. Dabei werden die erste Pouchhälfte 13 und die zweite Pouchhälfte 14 jeweils in die Ausnehmung 12 hinein umgeformt, was durch den Wärmeeintrag durch die Heizvorrichtung 10 unterstützt wird.

In Figur 4 ist ein vierter Zustand dargestellt, bei dem die Stempel 16,17 wieder nach oben Verfahren sind und ihre Startposition wieder erreicht haben. In diesem Prozessschritt ist ein Zellstapel 18 in die erste Pouchhälfte 13 eingesetzt. Die Zuführung des Zellstapels 18 kann beispielsweise mit einer nicht weiter dargestellten Zuführvorrichtung automatisiert erfolgen. Hierzu kann beispielsweise ein Förderbandsystem den vorgefertigten Zellstapel 18 zuführen der anschließend mithilfe eines Greifers, wahlweise in eine der beiden Pouchhälften 13,14 eingesetzt werden kann. Die Pouchhälften 13,14 können während des gesamten Assemblierprozesses mittels des Vakuums in der Matrize 12 angesaugt und auf diese Weise fixiert werden. Bei einer besonders einfachen Ausführungsform, wie der vorliegend dargestellten, kann es auch ausreichend sein nur eine Formvorrichtung 14 mit einem Vakuum zu beaufschlagen und die darin befindliche zweite Pouchhälfte 14 zu fixieren, wenn lediglich diese zweite Formvorrichtung 4 bewegt werden soll. In diesem Fall ist der Umformvorgang in der ersten Formvorrichtung 3 so langsam auszuführen, dass die darin eingeschlossene Luft entweichen kann. Die Umformung kann aber auch mit höherer Geschwindigkeit erfolgen, wenn in der ersten Formvorrichtung einfache Entlüftungskanäle vorgesehen werden, die dazu geeignet sind, die zwischen der Pouchfolie 5 und der Matrize 12 eingeschlossene Luft nach außen aus der Formvorrichtung 3 herauszuleiten. Vorliegend ist vorgesehen die zweite Formvorrichtung 4 mittels einer nicht weiter dargestellten Positioniervorrichtung in ihrer Lage zu verändern.

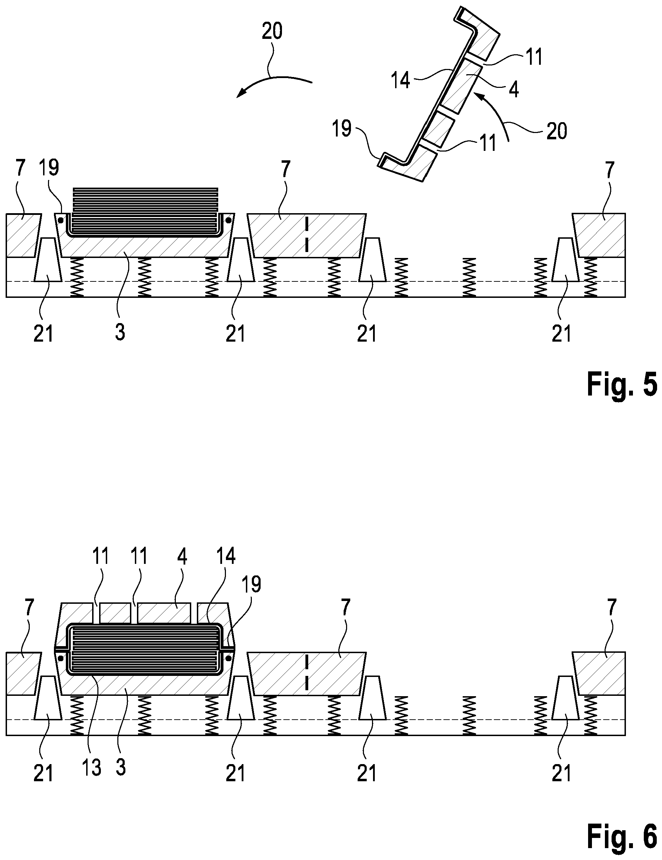

Die Figur 5 zeigt, wie die zweite Formvorrichtung 4 mittels der Positioniervorrichtung mit einer Stirnseite 19 entlang der Pfeile 20 in Richtung der Stirnseite 19 der ersten Formvorrichtung 3 nach links verschwenkt wird. Die zweite Formvorrichtung 4 führt dabei neben der Verschwenkbewegung in Richtung der Pfeile 20 zusätzlich eine Drehbewegung um ihre horizontale Körperlängsachse aus, sodass nach einem vollständigen Durchlaufen der Bewegungsbahn, welche von der Positioniervorrichtung vorgegeben wird, die Stirnseite 19 der ersten Formvorrichtung 3 in direktem Kontakt mit der Stirnseite 19 der zweiten Formvorrichtung 4 steht. Dieser Zustand ist in Figur 6 dargestellt. Während des Verschwenkens wird die zweite Pouchhälfte 14 mittels des Vakuums sicher in der zweiten Formvorrichtung 4 gehalten.

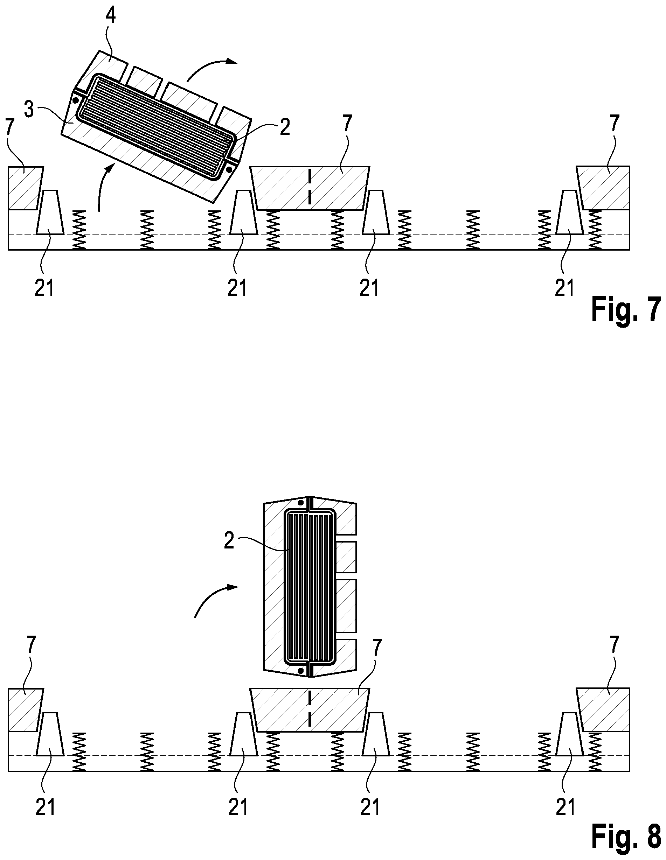

In dem nächsten in Figur 7 dargestellten Prozessschritt werden beide Formvorrichtung in 3,4 zusammen mit den Pouchhälften 13,14 und dem Zellstapel 18 miteinander verpresst und um 90° nach rechts in eine aufrechte Position verschwenkt.

In dieser in Figur 8 dargestellten aufrechten Position werden die Pouchhälften 13,14 der Batteriezelle 2 miteinander verbunden, d. h. die Pouchhälften 13,14 werden an wenigstens drei Seiten dicht miteinander verbunden. Dieser Vorgang wird auch als Siegeln der Batteriezelle 2 bezeichnet. Das Siegeln der Batteriezelle 2 kann in diesem Prozessschritt mit bereits bewährten Verfahren und Vorrichtungen erfolgen.

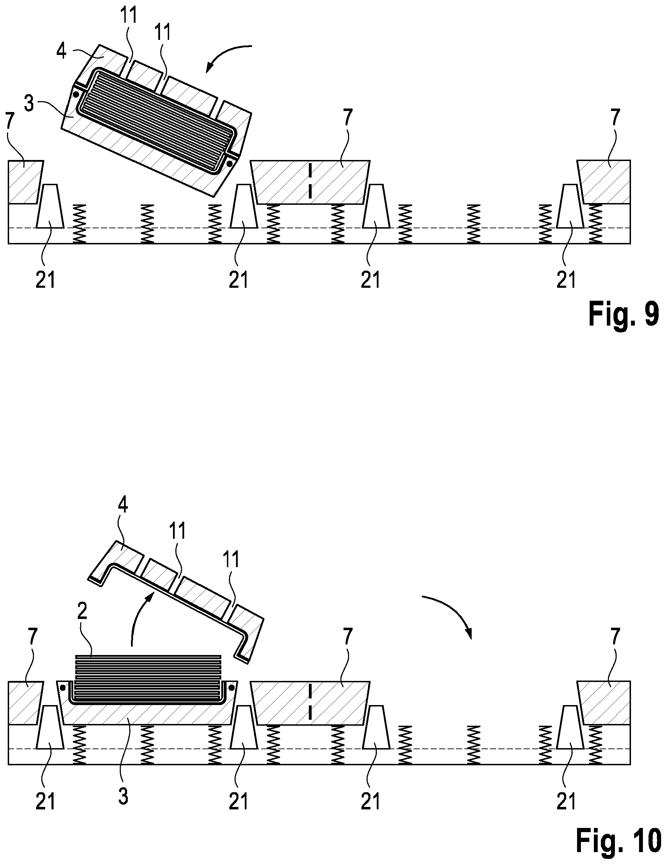

In Figur 9 ist dargestellt, wie die Formvorrichtungen 3,4 zusammen mit der Batteriezellen 2 nach dem Verbinden bzw. Siegeln zurück Verfahren werden. Die Positioniervorrichtung bewegt dabei zunächst alle drei Komponenten zurück nach links, sodass die erste Formvorrichtung 3 in ihrer Ausgangslage zurückkehrt. Anschließend wird dann, wie in Figur 10 dargestellt die zweite Formvorrichtung 4 nach rechts zurück in ihrer Ausgangslage verschreckt. Dabei wird die fertige Batteriezelle 2 freigelegt und kann entnommen werden. Die Positioniervorrichtung ist dabei so gestaltet, dass sie sowohl die erste Formvorrichtung 3 als auch die zweite Formvorrichtung 4 in der dargestellten Weise bewegen kann. Dies kann beispielsweise durch mechanische Antriebe und Getriebe erfolgen oder aber auch mittels frei bewegbarer Roboter, mit denen die Formvorrichtungen 3,4 erfasst und bewegt werden können.

Die vorliegende Erfindung hat somit eine Vielzahl von Vorteilen. So können mehrere Prozessschritte ausgeführt werden, ohne dass die Pouchfolie 5 bzw. die hergestellten Pouchfolienhälften 13,14 entnommen, gelagert, umpositioniert oder wieder neu positioniert werden müssen. An nur einer einzigen Arbeitsstation können der Trennschnitt vom Pouchfolienvorrat 6, der Umformvorgang der Pouchfolie, der Fertigschnitt der Außenkonturen, das Einsetzen des Zellstapel 18 sowie der Vorgang des Verbindens bzw. Siegelns durchgeführt werden. Hierbei bleiben die Batteriezellen 2 bzw. deren Komponenten während sämtlicher Prozessschritte immer innerhalb der Formvorrichtungen, sodass die Produktqualität, die Taktzeiten und die Genauigkeit bei der Fertigung erheblich verbessert werden. Weiterhin reduziert sich der Bedarf nach einem Handling der verwendeten Materialien erheblich. Auch kann der Zellstapel 18 wesentlich genauer und besser innerhalb der Pouchhälften 13,14 positioniert werden. Zusätzlich kann durch die geeignete Anordnung von Schneideinrichtungen, beispielsweise in Form von Messern in der Matrize 7, ein besonders präziser Fertigschnitt der fertigen Pouchhälften 13, 14 bzw. der fertigen Batteriezellen 2 erzielt werden.

### Bezugszeichenliste

- 1: Vorrichtung
- 2: Batteriezellen
- 3: erste Formvorrichtung
- 4: zweite Formvorrichtung
- 5: Pouchfolie
- 6: Pouchfolienvorrat
- 7: Matrize
- 8: erste Schneideinrichtung
- 9: zweite Schneideinrichtung
- 10: Heizvorrichtung
- 11: Absaugkanal
- 12: Ausnehmung
- 13: erste Pouchhälfte
- 14: zweite Pouchhälfte
- 15: Niederhalter
- 16: erster Stempel
- 17: zweiter Stempel
- 18: Zellstapel
- 19: Stirnseite
- 20: Pfeile
- 21: Matrizeneinsatz

## Patentansprüche

1. Verfahren zur Herstellung einer Batteriezelle (2), das wenigsten die folgenden Schritte aufweist:
a) Umformen einer ersten Pouchfolie (5) mittels einer ersten Formvorrichtung (3) mit einer ersten Ausnehmung (12) zu einer ersten Pouchhälfte (13);
b) Umformen einer zweiten Pouchfolie (5) mittels einer zweiten Formvorrichtung (4) mit einer zweiten Ausnehmung (12) zu einer zweiten Pouchhälfte (14);
c) Einlegen eines Zellstapels (18) in die erste Formvorrichtung (3) und die darin befindliche erste Pouchhälfte (13);
d) nachfolgendes Zusammenführen der ersten Formvorrichtung (3) mit der darin befindlichen umgeformten ersten Pouchhälfte (13) und der zweiten Formvorrichtung (4) mit der darin befindlichen zweiten Pouchhälfte (14)
e) zumindest teilweises Verbinden der ersten und zweiten Pouchhälften (13,14) zu einer Batteriezelle (2).

2. Verfahren nach dem vorhergehenden Anspruch, **dadurch gekennzeichnet, dass** das Umformen der Pouchfolie (5) zu einer Pouchhälfte (13,14) mittels
- eines atmosphärischen Überdrucks bzw. Unterdrucks oder
- wenigstens eines elektromagnetischen Impulses EMP durchgeführt wird.

3. Verfahren nach einem der vorhergehenden Ansprüche, **dadurch gekennzeichnet, dass** die Pouchhälfte (13,14) mittels eines Unterdrucks in der Formvorrichtung (3,4) fixiert wird.

4. Verfahren nach einem der vorhergehenden Ansprüche, **dadurch gekennzeichnet, dass** die Formvorrichtung (3,4,) beheizt wird.

5. Verfahren nach einem der vorhergehenden Ansprüche, **dadurch gekennzeichnet, dass** wenigstens zwei Bearbeitungsschritte ausgeführt werden, während sich die erste bzw. zweite Pouchhälfte (13,14) jeweils in der ersten bzw. zweiten Formvorrichtungen (3,4) befinden, wobei die Bearbeitungsschritte ein Abtrennen der zugeführte Pouchfolien (5) von einem Pouchfolienvorrat (6), das Umformen der Pouchfolien (5) zu Pouchhälften (13, 14), das Zusammenführen der Pouchhälften (13, 14), das Einlegen des Zellstapels (18), das Verbinden der Pouchhälften (13, 14) und ein Zuschneiden einer Außenkontur der Pouchhälften (13, 14) oder der Batteriezelle (2) umfassen.

6. Verfahren nach einem der vorhergehenden Ansprüche, **dadurch gekennzeichnet, dass** wenigstens eine der Pouchhälften (13,14) oder die Batteriezelle (2) mit den verbundenen Pouchhälften (13,14) in der Formvorrichtung (3,4) auf eine definierte Länge oder Außenkontur zugeschnitten wird.

7. Vorrichtung (1) zur Herstellung einer Batteriezelle (2) mit einem Verfahren nach einem der vorhergehenden Patentansprüche; wobei die Vorrichtung (1) eine erste und eine zweite Formvorrichtung (3,4) und jeweils wenigstens eine Fixiervorrichtung (11,15), eine Umformvorrichtung (16,17), eine Zuführvorrichtung für Zellstapel, eine Positioniervorrichtung zum Zusammenführen von Stirnseiten der Formvorrichtungen (3,4), eine Verbindungseinrichtung und eine erste Schneideinrichtung (8,9) aufweist.

8. Vorrichtung (1) nach dem vorhergehenden Anspruch 7, **dadurch gekennzeichnet, dass** wenigstens eine Formvorrichtung (3,4) eine Heizvorrichtung (10) aufweist.

9. Vorrichtung (1) nach einem der vorhergehenden Ansprüche 7 und 8, **dadurch gekennzeichnet, dass** die erste Schneideinrichtung (8,9) wenigstens zum Beschneiden einer Länge oder einer Kontur zumindest der Pouchfolie (5), der Pouchhälfte (13,14) oder der Batteriezelle (2) ausgebildet ist.

10. Vorrichtung (1) nach einem der vorhergehenden Ansprüche 7 bis 9, **dadurch gekennzeichnet, dass** eine zweite Schneidvorrichtung (8,9) zum Trennen einer endlos zugeführten Pouchfolie (5) vorgesehen ist.

## Claims

1. Method for producing a battery cell (2), which includes at least the following steps:
a) reshaping a first pouch foil (5) into a first pouch half (13) by means of a first molding device (3) with a first recess (12);
b) reshaping a second pouch foil (5) into a second pouch half (14) by means of a second molding device (4) with a second recess (12);
c) inserting a cell stack (18) into the first molding device (3) and the first pouch half (13) located therein;
d) thereafter bringing together the first molding device (3) with the reshaped first pouch half (13) located therein and the second molding device (4) with the second pouch half (14) located therein
e) at least partially connecting the first and second pouch halves (13, 14) to form a battery cell.

2. Method according to preceding claim, **characterized in that** the reshaping of the pouch foil (5) into a pouch half (13, 14) is carried out by means of
- an atmospheric positive pressure or negative pressure, or
- at least one electromagnetic pulse EMP.

3. Method according to one of the preceding claims, **characterized in that** the pouch half (13, 14) is fixed in the molding device (3, 4) by means of a negative pressure.

4. Method according to one of the preceding claims, **characterized in that** the molding device (3, 4) is heated.

5. Method according to one of the preceding claims, **characterized in that** at least two processing steps are carried out while the first and second pouch halve (13, 14) is located in the respective first and second molding device (3, 4), wherein the processing steps comprise a cutting off of the supplied pouch foils (5) from a pouch foil supply (6), the reshaping of the pouch foils (5) into pouch halves (13, 14), the bringing together of the pouch halves (13, 14), the inserting of the cell stack (18), the joining of the pouch halves (13, 14) and a cutting of an outer contour of the pouch halves (13, 14) or the battery cell (2).

6. Method according to one of the preceding claims, **characterized in that** at least one of the pouch halves (13, 14) or the battery cell (2) with the connected pouch halves (13, 14) is cut to a defined length or outer contour in the molding device (3, 4).

7. Device (1) for producing a battery cell with a method according to one of the preceding claims, wherein the device (1) comprises a first and a second molding device (3, 4) and, in each case, at least one fixing device (11, 15), a reshaping device (16, 17), a feed device for cell stacks,a positioning device for bringing together the end faces of the molding devices (3, 4), a connecting device and a first cutting device (8, 9).

8. Device (1) according to claim 7, **characterized in that** at least one molding device (3, 4) has a heating device (10).

9. Device (1) according to one of the preceding claims 7 and 8, **characterized in that** the first cutting device (8, 9) is designed at least for cutting a length or a contour of at least the pouch foil (5), the pouch half (13, 14) or the battery cell (2).

10. Device (1) according to one of the preceding claims 7 to 9, **characterized in that** it comprises a second cutting device (8, 9) for cutting an endlessly fed pouch foil (5).

## Revendications

1. Procédé de fabrication d'une cellule de batterie (2), lequel procédé comprend au moins les étapes suivantes :
a) mettre en forme un premier film de sachet (5) au moyen d'un premier dispositif de mise en forme (3) pourvu d'un premier évidement (12) afin de former une première moitié de sachet (13) ;
b) mettre en forme un deuxième film de sachet (5) au moyen d'un deuxième dispositif de mise en forme (4) pourvu d'un deuxième évidement (12) afin de former une deuxième moitié de sachet (14) ;
c) insérer un empilement de cellules (18) dans le premier dispositif de mise en forme (3) et la première moitié de sachet (13) située à l'intérieur ;
d) assembler ensuite le premier dispositif de mise en forme (3) pourvu de la première moitié de sachet mise en forme (13) située à l'intérieur et le deuxième dispositif de mise en forme (4) pourvu de la deuxième moitié de sachet (14) située à l'intérieur,
e) relier au moins partiellement les première et deuxième moitiés de sachet (13, 14) pour former une cellule de batterie (2).

2. Procédé selon la revendication précédente, **caractérisé en ce que** la mise en forme du film de sachet (5) pour obtenir une moitié de sachet (13, 14) est effectuée au moyen
- d'une surpression ou d'une dépression atmosphérique ou
- d'au moins une impulsion électromagnétique EMP.

3. Procédé selon l'une des revendications précédentes, **caractérisé en ce que** la moitié de sachet (13, 14) est fixée dans le dispositif de mise en forme (3, 4) par une dépression.

4. Procédé selon l'une des revendications précédentes, **caractérisé en ce que** le dispositif de mise en forme (3, 4) est chauffé.

5. Procédé selon l'une des revendications précédentes, **caractérisé en ce qu'**au moins deux étapes de traitement sont effectuées pendant que la première ou la deuxième moitié de sachet (13, 14) se trouvent respectivement dans le premier ou le deuxième dispositif de mise en forme (3, 4), les étapes de traitement comprenant la séparation des films de sachet fournis (5) d'une réserve de films de sachet (6), la mise en forme des films de sachet (5) pour obtenir des moitiés de sachet (13, 14), l'assemblage des moitiés de sachet (13, 14), l'insertion de la pile de cellules (18), la liaison des moitiés de sachet (13, 14) et le découpage du contour extérieur des moitiés de sachet (13, 14) ou de la cellule de batterie (2).

6. Procédé selon l'une des revendications précédentes, **caractérisé en ce que** l'une au moins des moitiés de sachet (13, 14) ou la cellule de batterie (2) pourvue des moitiés de sachet (13, 14) reliées dans le dispositif de mise en forme (3, 4) est découpée à une longueur définie ou un contour extérieur défini.

7. Dispositif (1) de réalisation d'une cellule de batterie (2) à l'aide d'un procédé selon l'une des revendications précédentes ; le dispositif (1) comportant un premier et un deuxième dispositif de mise en forme (3, 4) et respectivement au moins un dispositif de fixation (11, 15), un dispositif de mise en forme (16, 17), un dispositif d'alimentation de piles de cellules, un dispositif de positionnement destiné à l'assemblage les faces frontales des dispositifs de mise en forme (3, 4), un dispositif de liaison et un premier dispositif de découpage (8, 9).

8. Dispositif (1) selon la revendication 7 précédente, **caractérisé en ce qu'**au moins un dispositif de mise en forme (3, 4) comporte un dispositif de chauffage (10).

9. Dispositif (1) selon l'une des revendications précédentes 7 et 8, **caractérisé en ce que** le premier dispositif de découpage (8, 9) est conçu au moins pour découper une longueur ou un contour d'au moins le film de sachet (5), la moitié de sachet (13, 14) ou la cellule de batterie (2).

10. Dispositif (1) selon l'une des revendications précédentes 7 à 9, **caractérisé en ce qu'**un deuxième dispositif de découpage (8, 9) est prévu pour séparer un film de sachet (5) amené sans fin.
